# EUROPÄISCHE PATENTSCHRIFT

(11) **EP 4 255 836 B1**
(45) Veröffentlichungstag und Bekanntmachung des Hinweises auf die Patenterteilung: **08.04.2026**
(21) Anmeldenummer: 21815385.6
(22) Anmeldetag: 12.11.2021
(51) Int. Cl.: B65H 75/42, B65H 75/44, B65H 57/18, B65H 75/40

(54) **AUFWICKELEINHEIT FÜR EIN KABEL**
WINDING UNIT FOR A CABLE
UNITÉ D'ENROULEMENT POUR UN CÂBLE

(30) Priorität: 07.12.2020 DE 102020132471
(43) Veröffentlichungstag der Anmeldung: 11.10.2023
(73) Patentinhaber: Winding Concepts GmbH, 47807 Krefeld (DE)
(72) Erfinder: DOPPLER, Günther, 3400 Klosterneuburg (AT)
(74) Vertreter: LifeTech IP Spies & Behrndt Patentanwälte PartG mbB
(86) Internationale Anmeldenummer: PCT/EP2021/081492
(87) Internationale Veröffentlichungsnummer: WO 2022/122301

(56) Entgegenhaltungen:
- EP-A1- 1 477 448
- WO-A1-2017/189372
- US-A- 4 053 118

## Beschreibung

Die Erfindung betrifft eine Kabeltrommel und insbesondere eine Aufwickeleinheit für ein Kabel zum Laden für ein Elektrofahrzeug.

Die zunehmende Elektromobilität stellt ganz besondere Anforderungen an die erforderliche Infrastruktur. Das gilt nicht nur für eine ausreichend hohe Anzahl von Ladestationen, die an ein ausreichend dimensioniertes Energienetz angeschlossen sein müssen, sondern auch für ganz alltägliche und praktische Fragestellungen, zum Beispiel der Handhabung von individuellen Ladekabeln für einzelne Fahrzeuge.

In aller Regel liefern die Hersteller hierfür zusammen mit den Fahrzeugen Ladekabel aus, welche quasi lose zusammengelegt im Kofferraum, in der eigenen Garage oder in anderen Stauräumen des Fahrzeuges Platz finden. Wenn dann das Ladekabel zum Laden des Fahrzeuges an einem öffentlichen Ladepunkt hervorgeholt wird, wird es sowohl mit der einen Seite bzw. dem dort vorgesehenen Stecker mit dem Fahrzeug und auf der anderen Seite mit der Ladesäule verbunden. Ein Großteil des Kabels liegt dann üblicherweise auf dem Boden, d.h., auf der Straße, dem Gehweg, einem Parkplatz und im besten Fall auf dem Garagenboden. Gerade bei schlechtem Wetter, bei Regen, Schnee oder Matsch wird das Kabel nass und dreckig und muss dann nach dem Ladevorgang in diesem Zustand von Hand aufgewickelt werden, was nicht nur unangenehm ist, sondern auch hygienisch fragwürdig ist, da eine große Gefahr für die Verschmutzung der eigenen Kleidung bzw. der Hände potentiell hoch ist. Eine wirklich praktikable und alltagstaugliche Lösung für eine derartig unpraktische Handhabung von Ladekabeln ist derzeit von den Herstellern nicht vorgesehen.

Zwar gibt es eine ganze Reihe von Kabeltrommeln, die sich zum Aufwickeln von Elektrokabeln eigenen. So beschreibt beispielsweise das Dokument DE 10 2009 046 327 A1 eine Vorrichtung zur elektrischen Verbindung eines Elektrofahrzeuges mit einer Stromzapfstelle. Dabei ist auch ein Kabel auf einer Wickelvorrichtung erwähnt, welche über zwei Zahnräder angetrieben wird. Die eine Seite des Kabels wird in üblicher Weise wie bei einer normalen Kabeltrommel in einem vergleichsweise breiten Bereich aufgewickelt, während das andere Ende aus einem zentralen Bereich der Kabeltrommel austritt. Hierbei ergeben sich eine Reihe von Problemen, die insbesondere die Strompfadführung betreffen. Da das lange Ende des Kabels die Kabeltrommel beim Abwickeln bzw. Aufwickeln dreht, muss dem Übergang auf einen nicht drehenden Teil - d.h. auf den Teil des Kabels, der an zentraler Stelle austritt - besondere Aufmerksamkeit gewidmet werden. Hierfür kommen in aller Regel nur Schleifkontakte in Betracht. Durch die zu übertragende elektrische Leistung, die erforderlich ist, um ein Elektrofahrzeug aufzuladen, ergeben sich allerdings eine ganze Reihe von Problemen bei der Energieübertragung durch Schleifkontakte.

Eine andere Lösung ist in dem Dokument DE 10 2011 080 085 A1 beschrieben. Auch diese Anmeldung betrifft eine Kabeltrommel insbesondere für ein Elektrofahrzeug, wobei das Kabel um einen Wickelkern herum aufgewickelt oder entsprechend abgewickelt werden kann. Hierdurch werden Schleifkontakte vermieden und das Kabel kann einstückig in der Kabeltrommel gehalten werden. Allerdings ist gemäß diesem Dokument auch vorgesehen, dass ein Teil des Kabels aus dem zentralen Bereich der Kabeltrommel austritt. Dieser kann daher nicht für eine Achse und Lagerung der schweren Kabeltrommel genutzt werden. Außerdem ist es erforderlich, dass der innere Teil und der äußere Teil der Kabelwicklung übereinander liegen, wodurch die geometrischen Dimensionen der Kabeltrommel sehr groß werden und in einem Fahrzeug sehr viel von dem vorhandenen knappen Stauraum verbraucht.

In diesem Kontext existieren bereits einige Dokumente. Beispielsweise beschreibt das Dokument EP 1 477 448 A1 eine Kabeltrommel bestehend aus einer Trommel mit vorderen Flanschen. Es gibt einen zusätzlichen vorderen Flansch, um einen verlängerten Abschnitt des Kabels zu befestigen. Dieser Hilfsflansch ist mit einer Ausnehmung zur Aufnahme eines Steckerabschnitts am aufzuwickelnden Kabel versehen. Das Dokument US 4 053 118 A1 beschreibt eine Wickeleinheit zum Aufwickeln von Schlauch- oder elektrische Kabelleitungen ohne störende Drehverbindungen für die beteiligten Flüssigkeits- oder Stromkreise. Beim Abwickeln der Leitung von der Trommel wird ein weiterer Leitungsabschnitt zunächst von einer kleinen Nabenverlängerung neben der Trommel abgewickelt und dann in entgegengesetzter Richtung wieder aufgewickelt, so dass dieser interne Leitungsabschnitt, der sich im Trommelgehäuse befindet, weniger als ein Drittel so viel Platz benötigt wie die externe Länge, die auf- und abgewickelt wird. Darüber hinaus beschreibt das Dokument WO 2017 / 189 372 A1 ein Verfahren und eine Trommelkonstruktion für ein Einblasen von Kabeln von einer Trommel in einen Zugangspunkt in der Mitte der Spannweite eines Kabelkanals. Die Kabeltrommel weist dabei eine zentrale Nabe auf, und genauso einen ersten Flansch, der sich in der Nähe einer Kante der zentralen Nabe befindet, einen zweiten Flansch, der sich in der Nähe einer gegenüberliegenden, zweiten Kante der Nabe befindet, und einen dritten Flansch, der sich zwischen dem ersten und dem zweiten Flansch befindet.

Es besteht daher ein Bedarf für eine Vorrichtung zum Aufwickeln und Verstauen von Ladekabeln für Elektrofahrzeuge, welche die bekannten Nachteile der traditionell eingesetzten Technik überwindet, kompakt ist und darüber hinaus noch Voraussetzungen für weitere Verbesserungen des täglichen Umgangs ermöglicht.

Dieser Erfindung liegt daher die Aufgabe zu Grunde, eine Aufwickelvorrichtung vorzustellen, welche nicht durch die Nachteile der bisherigen Ladekabel für Elektrofahrzeuge belastet ist und insbesondere eine leicht handhabbare, alltagstaugliche Bauart aufweist.

### Kurzbeschreibung der Erfindung

Die oben genannte Aufgabe wird durch die Gegenstände der unabhängigen Patentansprüche gelöst. Vorteilhafte Ausführungsformen der vorliegenden Erfindung sind durch die abhängigen Ansprüche beschrieben.

Gemäß einem Aspekt der vorliegenden Erfindung wird eine Aufwickeleinheit vorgestellt, die für ein Kabel zum Laden für ein Elektrofahrzeug geeignet ist. Die Aufwickeleinheit weist dabei eine rotationssymmetrische Wickeleinheit auf, die drehbar um eine Achse gelagert ist. Außerdem ist ein rotationssymmetrischer Innenkörper vorhanden, der fest mit der Achse verbunden ist. Weiterhin ist eine rotationssymmetrische Austrittsronde vorgesehen, die drehbar am die Achse gelagert ist. Dabei weist die Wickeleinheit einen ersten Wickelbereich einer ersten Breite auf, sodass ein Kabel in den ersten Wickelbereich von einem Bereich nahe der Achse übereinander aufwickelbar ist. Die Wickeleinheit weist auch einen zweiten Wickelbereich in einem radialen Peripheriebereich der Wickeleinheit auf, wobei der zweite Wickelbereich angrenzend an den ersten Wickelbereich angeordnet ist und eine zweite Breite aufweist, sodass ein Kabel in dem zweiten Wickelbereich von einem Bereich nahe dem ersten Wickelbereich nebeneinander aufwickelbar in Richtung der Austrittsronde entgegengesetzt zu einer Wickelrichtung im ersten Wickelbereich aufwickelbar ist. Der zweite Wickelbereich erstreckt sich über einen radialen Teil des Innenkörpers und kann diesen teilweise umschließen.

Die Austrittsronde ist um eine vorgegebene Anzahl von Umdrehungen zusammen mit der Wickeleinheit drehbar und dann blockierbar, sodass ein Kabel infolge einer Weiterdrehung der Wickeleinheit aus einer Austrittsöffnung in einem radial peripheren Bereich der Austrittsronde in Höhe des zweiten Wickelbereiches herausschiebbar ist.

Die vorgestellte Kabeltrommel weist eine Reihe von technischen Effekten und Vorteilen und Verbesserungen auf: Gegenüber traditionellen Kabeltrommeln ist sowohl der lange Teil des Kabels auf der einen Seite der Aufwickeleinheit als auch der andere, kurze Teil des Kabels individuell konfigurierbar und in keiner Weise von der Länge der anderen Seite des Kabels abhängig. Dies wird durch die spezielle Form im Inneren der Aufwickeleinheit und die Kabelführung erreicht.

Dadurch, dass sich die rotationssymmetrische Austrittsronde teilweise frei zusammen mit der Wickeleinheit drehen kann, andererseits aber, nach einer bestimmten Anzahl von Drehungen der Wickeleinheit, blockiert werden kann, so dass sich beide Einheiten - insbesondere die Wickeleinheit und die Austrittsronde - teilweise gemeinsam und teilweise erzwungenermaßen nicht gemeinsam drehen. Auf diese Weise kann erreicht werden, dass ein Ende des Kabels aus einer Öffnung der Austrittsronde herausgeschoben wird. Hierbei handelt es sich in aller Regel um den kürzeren Teil des Kabels. Dabei ist auch anzumerken, dass das Kabel sich nicht in einem Zentralbereich aus der Austrittsronde herausschieben muss, sondern in einem peripheren Bereich derselben.

Dies kann dadurch erreicht werden, dass die beiden Wickelbereiche, die in der Wickeleinheit vorgesehen sind, unterschiedlich gestaltet sind. Der zweite Wickelbereich befindet sich nur in einem peripheren Bereich der Wickeleinheit angrenzend an die Austrittsronde. Eine Verbindung zwischen dem ersten und dem zweiten Wickelbereich wird durch ein Kabelübergangsstück von dem ersten Wickelbereich zu dem zweiten Wickelbereich erreicht. Das Kabelübergangsstück wird im Inneren der Aufwickeleinheit zwischen dem ersten Wickelbereich und dem Innenkörper geführt. Außerdem sind die beiden Enden des Kabels in der Wickeleinheit gegenläufig aufgewickelt.

Ein Bediener kann nun das lange Ende des Kabels von dem ersten Wickelbereich durch ein einfaches Ziehen an dem Kabel abwickeln; alternativ kann der optional vorhandene motorische Antrieb genutzt werden. Dabei dreht sich die Austrittsronde zusammen mit der Wickeleinheit, bis eine vorgegebene Anzahl von Umdrehungen erreicht ist. Dann wird die Austrittsronde blockiert - insbesondere gegenüber einem stationären Teil wie zum Beispiel einem Gehäuse der Aufwickeleinheit, gegenüber dem sich die Wickeleinheit weiterhin dreht - sodass das Kabel aus der Austrittsöffnung der Austrittsronde automatisch herausgeschoben wird. Einem Benutzer wird also das zweite Kabelende automatisch zur Verfügung gestellt.

Dadurch, dass sich im Innern der Wickeleinheit ein Antrieb - zum Beispiel ein elektrischer Antrieb - befinden kann, werden in einer ersten Aufwickelphase sowohl das kurze Ende in dem zweiten Wickelbereich aufgewickelt während sich die Austrittsronde nicht mit der Wickeleinheit zusammen dreht, als auch das lange Ende in dem ersten Wickelbereich aufgewickelt.

In einer zweiten Aufwickelphase - insbesondere nachdem das kurze Ende des Kabels bereits aufgewickelt wurde - dreht sich die Austrittsronde zusammen mit der Wickeleinheit, wobei nun das lange Ende des Kabels in dem ersten Wickelbereich komplett aufgewickelt wird. Damit sind beide Kabelenden optimal und automatisch - durch den elektrischen Antrieb im Inneren der Wickeleinheit - aufgewickelt.

Außerdem sind alle Elemente der Aufwickeleinheit in ein Gehäuse integrierbar, sodass sich eine insgesamt sehr kompakte Einheit ergibt, die leicht in einem Fahrzeug oder an einem anderen Ort verstaubar ist. Die vorgeschlagene Aufwickeleinheit kann also sowohl stationär wie auch mobil betrieben werden.

Zusätzlich ist es leicht möglich, sowohl an der Austrittsöffnung als auch in dem Bereich, in dem das lange Kabelende in den ersten Wickelbereich eintritt, jeweils eine Reinigungseinheit für das Kabel vorzusehen. Auf diese Weise wird es möglich, dass das Kabel immer in einem sauberen Zustand in der Aufwickeleinheit aufgewickelt wird, ohne dass ein Benutzer das Kabel mit der Hand berühren oder säubern muss. Der Benutzer muss lediglich die Stecker sowohl aus dem Fahrzeug als aus der Ladeeinheit herausziehen und jeweils auf den Boden legen. Das Aufwickeln kann durch die Aufwickeleinheit komplett autonom durchgeführt werden, nachdem der Aufwickelvorgang - zum Beispiel elektrisch - ausgelöst wurde.

Dadurch, dass die Austrittsronde nach einer konfigurierbaren Anzahl von Umdrehungen blockiert werden kann, kann auch gewährleistet werden, dass das Kabel aus dem Wickelbereich 1 nahezu komplett ausgewickelt ist, bevor das Kabel aus dem Wickelbereich 2 herausgefahren werden kann. Dadurch kann das Kabel erst angeschlossen werden, wenn die komplette Länge abgewickelt ist. Dadurch wird eine thermische Überlastung des Kabels ausgeschlossen.

Der optionale motorische Antrieb bietet den Vorteil, dass die Kabeltrommel nicht - wie für einen manuellen "Kurbelbetrieb" praktikabel - auf "Bauchhöhe" angehoben und gehalten werden muss. Vielmehr kann sie mit wenig Kraftaufwand am ausgestreckten Arm den Wickelvorgang automatisch ausführen.

Außerdem kann durch einen Verbau aller elektrischen / elektronischen Komponenten im statischen Innenkörper ein sehr guter Schutz gegen Schädigungen durch Schmutz, insbesondere Wasser gewährleistet werden.

Im Folgenden werden weitere Ausführungsbeispiele der Aufwickeleinheit beschrieben:

Gemäß einer erweiterten Ausführungsform der Aufwickeleinheit kann ein Kabel mit einem Kabeldurchmesser vorhanden sein, das sich von dem ersten Wickelbereich zwischen diesem und dem Innenkörper in den zweiten Wickelbereich und aus der Austrittsöffnung erstreckt. Die Kabelenden können mit Steckern versehen sein. Durch das Vorhandensein des Kabels wird die Aufwickeleinheit für den praktischen Einsatz konfektioniert. Dadurch, dass das Kabel durch dafür vorgesehene Schlitze in die Aufwickeleinheit bzw. die beiden Wickelbereiche einführbar ist, können die Aufwickeleinheit und das Kabel von unterschiedlichen Quellen erworben werden. Außerdem kann ein bereits vorhandenes Kabel durch die Aufwickeleinheit handhabbarer gemacht und aufgewertet werden. Dabei wird davon ausgegangen, dass die Aufwickeleinheit nicht mit dem Kabel zusammen ausgeliefert werden muss. Es können also auch vorhandene Ladekabel für Elektrofahrzeuge nachträglich mit der Aufwickeleinheit ausgerüstet werden.

Gemäß einer erweiterten Ausführungsform der Aufwickeleinheit kann das Kabel in einem aufgewickelten Zustand mit einem ersten Abschnitt in dem ersten Wickelbereich aufgewickelt sein und mit seinem zweiten Abschnitt auf den zweiten Wickelbereich gegenläufig aufgewickelt sein. Dabei ist zu berücksichtigen, dass sich ein dritter kurzer Abschnitt (d.h. ein Übergangsstück) zwischen dem ersten Abschnitt und dem zweiten Abschnitt des Kabels im Innern der Aufwickeleinheit befindet und hier quasi seine Wickelumkehrung erfährt.

Gemäß einer vorteilhaften Ausführungsform der Aufwickeleinheit kann der erste Abschnitt länger als der zweite Abschnitt sein. Auf diese Weise kann beispielsweise die Aufwickeleinheit direkt neben dem Fahrzeug bzw. der Ladebuchse des Fahrzeuges stehen, während das lange Ende des Kabels mit der Ladesäule oder dem Ladepunkt an einem entfernteren Platz verbunden werden kann.

Gemäß einer weiteren Ausführungsform der Aufwickeleinheit kann die erste Breite - insbesondere des ersten Wickelbereiches - dem Kabeldurchmesser plus einer Toleranzbreite, die kleiner als die Kabelbreite ist, entsprechen. Damit wird sichergestellt, dass sich das Kabel Lage für Lage in den ersten Wickelbereich aufwickeln kann, ohne dass es sich in dem ersten Wickelbereich verklemmen kann. Die Windungen des Kabels liegen dann im Wesentlichen übereinander.

Gemäß einer alternativen Ausführungsform der Aufwickeleinheit kann die erste Breite - insbesondere des ersten Wickelbereiches - breiter als der Kabeldurchmesser sein. In diesem Fall kann das Kabel auch in mehreren Kabelbreiten nebeneinander in dem ersten Wickelbereich aufgewickelt sein und danach erst in eine nächste Wickelebene übergehen. Vorteilhafterweise würde die Wickeleinheit aber nicht mehr als 2 bis 3 Kabelbreiten breit sein, um ein geordnetes Aufwickeln des Kabels zu ermöglichen. Die Wicklungen des Kabels liegen dann sowohl nebeneinander als auch übereinander. Auf diese Weise kann trotz kompakter Bauform in dem ersten Wickelbereich ein längerer Kabelabschnitt aufgewickelt sein. Damit werden auch etwas entferntere Ladepunkte erreichbar.

Gemäß einer sinnvollen Ausführungsform der Aufwickeleinheit kann die zweite Breite - insbesondere des zweiten Wickelbereiches - mindestens dem Kabeldurchmesser entsprechen. Dadurch kann in dem zweiten Wickelbereich eine Kabellänge von mindestens dem Umfang des zweiten Wickelbereiches aufgewickelt sein. Alternativ können auch 2 bis 3 (oder mehr) Kabelbereiten in dem zweiten Wickelbereich als Wickelraum vorgesehen sein, sodass die Kabellänge, die aus der Austrittsöffnung der Austrittsronde herausgeschoben wird, entsprechend länger sein kann.

Gemäß einer weiteren vorteilhaften Ausführungsform der Aufwickeleinheit kann das Kabel für eine Stromleistung von mindestens 11 kW ausgelegt sein. Außerdem ist eine Auslegung für eine höhere Lade- bzw. Stromleistung möglich. Damit lassen sich verschiedene Standards bei Elektrokabeln für das Aufladen von Elektrofahrzeugen mit der vorgeschlagenen Aufwickeleinheit aufwickeln.

Gemäß einer erweiterten Ausführungsform der Aufwickeleinheit kann der Kabeldurchmesser mindesten 16mm oder mehr - insbesondere 18mm - betragen. Außerdem sind einphasige Kabel mit drei Leitern oder 3-Phasenkabel mit z.B. fünf Leitern einsetzbar.

Gemäß einer weiteren vorteilhaften Ausführungsform der Aufwickeleinheit kann der Innenkörper in einem ersten Bereich einen kleineren Durchmesser ausweisen als in einem zweiten Bereich, über dessen radialem Teil sich der zweite Wickelbereich erstreckt. Auf diese Weise wird es ermöglicht, dass das Kabel in dem ersten Wickelbereich im Wesentlichen übereinander und in dem zweiten Wickelbereich im Wesentlichen nebeneinander aufgewickelt bzw. abgewickelt wird.

Gemäß einer besonders vorteilhaften Ausführungsform der Aufwickeleinheit kann die Wickeleinheit drehbar auf dem ersten Bereich des Innenkörpers gelagert sein. Damit wird dieser Teil des Innenkörpers ein Lager- bzw. Drehbereich für die Wickeleinheit. Typischerweise ist der Innenkörper fest mit einem Gehäuse verbunden.

Deshalb und gemäß einem weiteren Ausführungsbeispiel der Aufwickeleinheit kann der Innenkörper hohl sein und eine Rotationsantriebseinheit für die Aufwickeleinheit aufweisen. Auf diese Weise kann die Wickeleinheit ohne manuelle Anstrengung angetrieben werden. Dafür können sich im Inneren des Innenkörpers ein elektrischer Motor und eine Stromversorgung - beispielsweise ein Akku oder ein Netzteil - sowie eine elektrische und/oder elektronische Steuereinheit befinden.

Dementsprechend, und gemäß einem weiteren Ausführungsbeispiel der Aufwickeleinheit, kann die Rotationsantriebseinheit den Elektromotor aufweisen, der die Wickeleinheit gegenüber dem Innenkörper antreibt.

Vorteilhafter Weise kann gemäß einem ergänzenden Ausführungsbeispiel der Aufwickeleinheit der Motor von außerhalb des Innenkörpers schaltbar sein. Dies kann beispielsweise durch einen Schalter am Gehäuse der Aufwickeleinheit, einen Schlüsselschalter oder ähnlich erfolgen. Durch einen Schlüsselschalter kann auch erreicht werden, dass unbefugte den Antrieb nicht in Gang setzen.

Außerdem kann gemäß einem zusätzlichen Ausführungsbeispiel der Aufwickeleinheit der Motor ferngesteuert schaltbar sein. Dies kann über eine Funk Fernsteuerung, über eine NFC-Verbindung (Near Field Communication), eine Bluetooth-Verbindung, WLAN oder ähnlich erfolgen.

Gemäß einem weiteren eleganten Ausführungsbeispiel der Aufwickeleinheit kann eine Verriegelung zwischen der Austrittsronde und/oder der Wickeleinheit und/oder dem Innenkörper elektromagnetisch aus dem Innenkörper auslösbar sein. Auf diese Weise lässt sich die Austrittsronde nach der vorkonfigurierten Anzahl von Umdrehungen gegenüber dem Innenkörper bzw. dem Gehäuse festsetzen, sodass sich nur die Wickeleinheit weiter um den Innenkörper drehen kann, sodass das kurze Kabelende aus dem zweiten Wickelbereich durch die Austrittsöffnung herausgeschoben wird.

Entsprechend einem weiteren praktischen Ausführungsbeispiel der Aufwickeleinheit können zusätzlich eine erste Reinigungseinheit im Bereich der Austrittsöffnung und/oder eine zweite Reinigungseinheit im Bereich des ersten Wickelbereiches vorhanden sein. Das Kabel würde dann jeweils an diesen Reinigungsbereichen vorbei oder durch sie hindurch laufen, wodurch es gereinigt werden würde. Somit würde sich im Inneren der Aufwickeleinheit immer ein sauberes Kabel befinden.

Weiterhin kann gemäß einer Ausführungsform der Aufwickeleinheit vorgesehen sein, dass das Kabel mit montierten Steckern an den beiden Enden in den ersten Wickelbereich, zwischen dem ersten Wickelbereich und dem Innenkörper, in den zweiten Wickelbereich und aus der Austrittsöffnung durch jeweilige Schlitze in der Wickeleinheit und der Austrittsronde einlegbar ist. Auf diese Weise ließen sich die Aufwickeleinheit und das Kabel von unterschiedlichen Quellen beziehen. Auch ein bereits vorhandenes Kabel ließe sich so mit der vorgeschlagenen Aufwickeleinheit verbinden ohne dass einer oder beide Stecker demontiert werden müssten.

Eine ergänzende Ausführungsform der Aufwickeleinheit kann vorsehen, dass zusätzlich ein Gehäuse mit Öffnungen für die beiden Enden des Kabels vorgesehen ist, von dem mindestens die Wickeleinheit umschlossen werden würde. Außerdem könnte das Gehäuse für einen sicheren Stand der Wickeleinheit auf dem Boden sorgen.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnungen dieser Anmeldung sind lediglich als schematisch und als nicht maßstabsgetreu anzusehen.

### Kurze Beschreibung der Figuren

Im Folgenden werden bevorzugte Ausführungsbeispiele beispielhaft und mit Bezug auf die folgenden Figuren beschrieben:
Fig. 1 stellt ein Ausführungsbeispiel der erfindungsgemäßen Aufwickeleinheit für ein Kabel zum Laden für ein Elektrofahrzeug dar.
Fig. 2 zeigt schematisch einen Querschnitt durch einen Teil der Aufwickeleinheit.
Fig. 3 zeigt eine Seitenansicht der Austrittsronde, aus der das Kabel herausgeschoben bzw. auch aufgewickelt wird.
Fig. 4 zeigt, wie das Kabel von dem ersten Wickelbereich in den zweiten Wickelbereich geführt wird.

### Detaillierte Beschreibung von Ausführungsbeispielen

Folgende Begriffe und Ausdrücke werden in diesem Dokument genutzt:

Der Begriff "Elektrofahrzeug" beschreit jedes Fahrzeug, welches mit einem elektrischen Antrieb versehen ist. Dazu gehören E-Autos, E- Transporter, E-Motorräder, E-Motorroller und auch E-LKWs sowie elektrische Boote, Flugzeuge und elektrische Schienenfahrzeuge. Weitere elektrisch betriebene Fahrzeuge sind nicht ausgeschlossen.

Der Begriff "Innenkörper" beschreibt einen rotationssymmetrischen Körper, der sich im Inneren der Aufwickeleinheit befindet und mindestens teilweise von der Wickeleinheit umschlossen wird. Der Teil des Innenkörpers, der einen kleineren Durchmesser aufweist, kann als Gegenlager für die Wickeleinheit dienen. Zwischen beiden kann ein Kugellager, ein Doppelkugellager ein Rollenlager oder ein Gleitlager vorhanden sein. Der Innenkörper kann entweder massiv oder hohl ausgeführt werden. Falls es sich um einen hohlen Innenkörper handelt, kann dieser entweder auf einer oder auf beiden Seiten mit Deckeln verschlossen werden. Auf diese Weise können leicht Wartungsarbeiten z.B. an dem innen liegenden Elektromotor vorgenommen werden. Der schmale Teil des Innenkörpers kann als Drehachse für die Wickeleinheit dienen. Der Innenkörper kann auch einen Zapfen in der Mitte der breiteren Seite aufweisen (z.B.) auf dem Deckel, sodass er auch als Achse für die Austrittsronde dienen kann. Andere Achsführungen sind denkbar - z.B. ausgehend von einem Gehäuse der Aufwickeleinheit.

Der Begriff "Wickeleinheit" beschreibt ein im Wesentlichen rotationssymmetrisches Element der Aufwickeleinheit, die einen ersten Wickelbereich und einen zweiten Wickelbereich aufweist. Ein Kabel kann durch eine in Richtung des Innenkörpers weisende Öffnung einer Seitenwand des ersten Wickelbereiches zum zweiten Wickelbereich geführt werden.

Der Begriff "Austrittsronde" beschreibt ein ringförmiges Element mit einer Austrittsöffnung. Die Austrittsronde sollte einen Durchmesser haben, der mindestens die Größe des zweiten Wickelbereiches der Wickeleinheit plus z.B. einen doppelten Kabeldurchmesser aufweist. Die Austrittsronde kann auch als kreisrunde Scheibe ausgebildet sein oder einen trennbaren Innenteil aufweisen, der von einer Achse aufgenommen werden kann. Außerdem kann die Austrittsronde gegenüber einer Rotation der Wickeleinheit blockiert werden. Dies kann einerseits durch einen Blockierstift (auch manuell einführbar) oder alternativ beispielsweise elektromagnetisch aus dem Innenkörper heraus geschehen. Vorteilhafterweise kann ein Elektromagnet eine Verriegelung betätigen.

Der Begriff "Austrittsöffnung" beschreibt eine Öffnung in der Austrittsronde, durch die das Kabel herausgeschoben werden kann. Typischerweise wird das Herausschieben im Wesentlichen in tangentialer Richtung einer Oberfläche der Austrittsronde geschehen.

Der Begriff "Kabel" beschreibt ein elektrisches mehradriges Kabel, welches für eine Leistungsübertragung von mindestens 11 kW oder mindestens 16 A bei 240 V vorgesehen ist. Derartige Kabel haben typischerweise einen Durchmesser von knapp 2 cm (insbesondere 1,8 cm). Die Aufwickeleinheit ist allerdings auch für Kabel mit kleineren Durchmessern und auch wesentlich größeren Durchmessern auslegbar.

Der Begriff "Rotationsantriebseinheit" beschreibt eine im Wesentlichen elektrisch betriebene Einheit - wie beispielsweise einen Elektromotor mit einem zugehörigen Akku, der den Motor mit elektrischer Energie versorgen kann - sodass die Wickeleinheit gegenüber dem Innenkörper angetrieben und in Rotation versetzt werden kann.

Der Begriff "Reinigungseinheit" beschreibt eine Vorrichtung in der Nähe der Austrittsöffnung der Austrittsronde an der das Kabel vorbei oder hindurch geleitet werden kann. Die Reinigungseinheit besteht beispielsweise aus Bürsten und/oder Schwämmen, um eine Reinigung des Kabels beim Aufwickeln zu gewährleisten. Die Reinigungseinheit kann entweder direkt auf der Austrittsronde oder einem Gehäuse vorgesehen sein, welches die Aufwickeleinheit umschließt. Zusätzlich kann auch an dem ersten Wickelbereich eine Reinigungseinheit vorhanden sein.

Es wird darauf hingewiesen, dass Merkmale bzw. Komponenten von unterschiedlichen Ausführungsformen, die mit den entsprechenden Merkmalen bzw. Komponenten der Ausführungsform nach gleich oder zumindest funktionsgleich sind, weitgehend mit den gleichen Bezugszeichen oder mit einem anderen Bezugszeichen versehen sind, welches sich lediglich in seiner ersten Ziffer von dem Bezugszeichen eines (funktional) entsprechenden Merkmals oder einer (funktional) entsprechenden Komponente unterscheidet. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, sodass für den Fachmann mit den hier explizit dargestellten Ausführungsvarianten eine Vielzahl von verschiedenen Ausführungsformen als offensichtlich offenbart anzusehen sind.

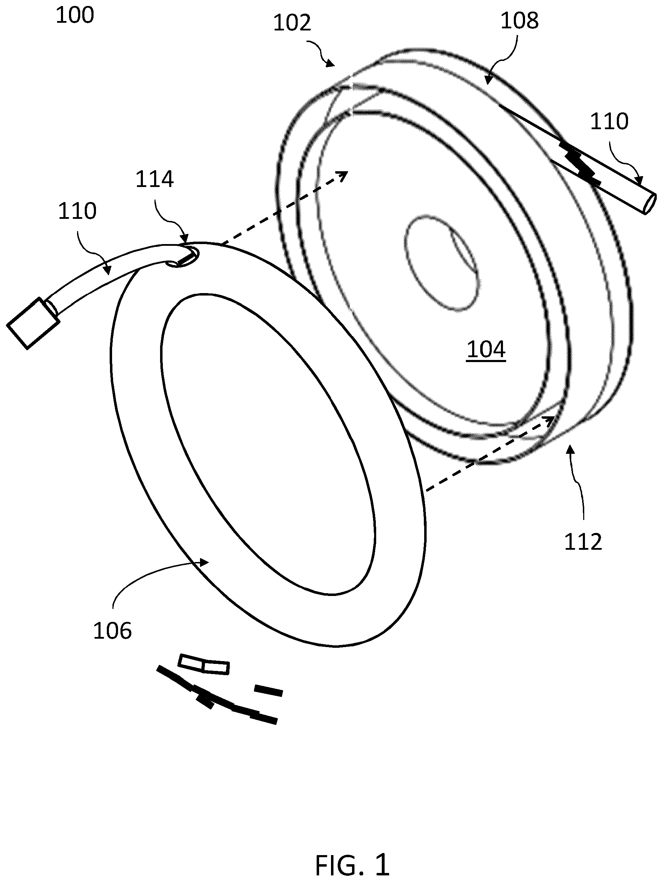

**Fig. 1** stellt ein Ausführungsbeispiel der erfindungsgemäßen Aufwickeleinheit 100 für ein Kabel zum Laden für ein Elektrofahrzeug dar. Die Aufwickeleinheit 100 weist eine rotationssymmetrische Wickeleinheit 102, die drehbar um eine Achse (nicht dargestellt) gelagert ist, einen rotationssymmetrischen Innenkörper 104, der fest mit der Achse verbunden ist, sowie eine rotationssymmetrische Austrittsronde 106 auf, die drehbar um die Achse gelagert ist.

Die Wickeleinheit 102 weist einen ersten Wickelbereich 108 einer ersten Breite auf, sodass ein Kabel 110 in den ersten Wickelbreich 108 von einem Bereich nahe der Achse übereinander aufwickelbar ist. Die Wickeleinheit weist auch einen zweiten Wickelbereich 112 in einem radialen Peripheriebereich der Wickeleinheit 102 auf (ohne Kabel schematisch dargestellt), wobei der zweite Wickelbereich 112 angrenzend an den ersten Wickelbereich 108 angeordnet ist und eine zweite Breite aufweist, sodass das Kabel 110 in dem zweiten Wickelbereich 112 von einem Bereich nahe dem ersten Wickelbereich 108 nebeneinander aufwickelbar in Richtung der Austrittsronde 106 entgegen einer Wickelrichtung im ersten Wickelbereich 108 aufwickelbar ist. Der zweite Wickelbereich 112 erstreckt sich radial über einen Teil des Innenkörpers 104.

Die Austrittsronde 106 dreht sich eine vorgegebene Anzahl von Umdrehungen zusammen mit der Wickeleinheit 102 und ist dann blockierbar, sodass das Kabel 110 infolge einer Weiterdrehung der Wickeleinheit 102 aus einer Austrittsöffnung 114 in einem radial peripheren Bereich der Austrittsronde 106 in Höhe des zweiten Wickelbereiches 112 herausschiebbar ist.

Die Pfeile von der Austrittsronde 106 in Richtung des Innenkörpers 104 sollen lediglich andeuten, dass sich die Austrittsronde 106 normalerweise im montierten Zustand dicht vor dem Innenkörper 104 unmittelbar vor dem zweiten Wickelbereich 112 befindet.

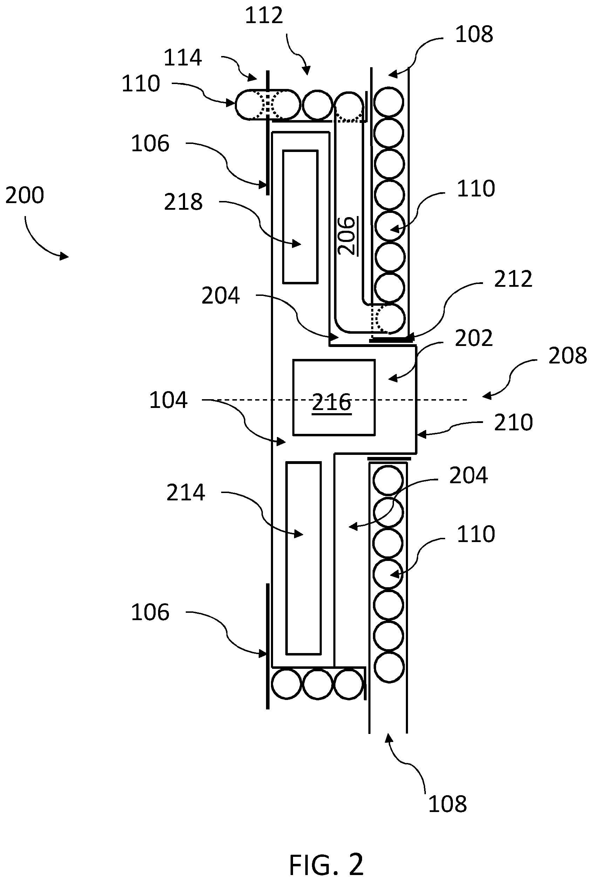

**Fig. 2** zeigt schematisch einen Querschnitt 200 durch einen Teil der Aufwickeleinheit. Gut erkennbar ist der erste Wickelbereich 108, indem das Kabel 110 in Lagen übereinander aufgewickelt ist. Außerdem erkennt man den Innenkörper 104 und die Austrittsronde 106, aus dessen Austrittsöffnung 114 das Kabel 110 austreten kann. In dieser Figur erkennt man auch, dass das Kabel in dem zweiten Wickelbereich 112 nebeneinander aufgewickelt ist, wenn mehrere Windungen vorhanden sind. Das Kabel 110 verlässt in einem unteren Bereich des Wickelbereiches 108 - also in der Nähe des schmaleren Teils 202 des Innenkörpers 104 - den ersten Wickelbereich 108, um in einem Hohlraum 204 zwischen dem ersten Wickelbereich 108 und dem Innenkörper 104 über ein kurzes Verbindungsstück 206 in den zweiten Wickelbereich 112 geführt zu werden, indem es nun gegenläufig zu dem ersten Wickelbereich aufgewickelt ist.

Im Gegensatz zu Figur 1 ist der Innenkörper 104 nun auf der linken Seite geschlossen dargestellt. Dies kann durch einen linksseitigen Deckel für den Innenkörper 104 erreicht werden. Im Inneren des Innenkörpers 104 können ein elektrischer Antriebsmotor 216, ein Akku 214, ein Fernsteuerempfänger und andere Steuerungselektronik 218 untergebracht werden. Außerdem kann die Elektrik bzw. Elektronik in dem Innenkörper 104 über eine Kabelverbindung in der Nähe der schematisch dargestellten Achse 208 zum Beispiel im Bereich 210 des Innenkörpers 104 aus diesem herausgeführt werden. Dies gilt sowohl für einen Ladestrom für den Akku (nicht dargestellt) als auch für notwendige Steuersignale. Außerdem ist ein Lager bzw. Gleitlager 212 zwischen der Wickeleinheit 102 und dem Innenkörper 104 dargestellt.

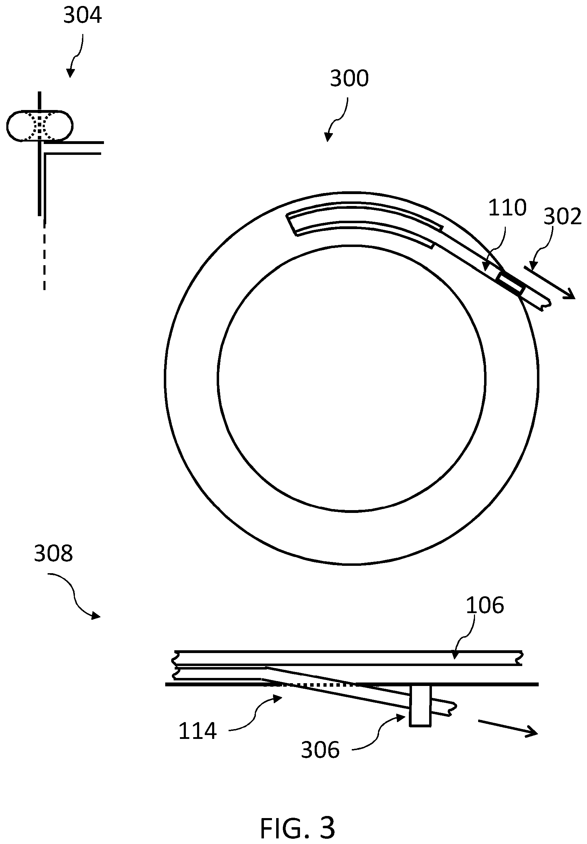

**Fig. 3** zeigt eine Seitenansicht 300 der Austrittsronde 106, aus der das Kabel 110 in Pfeilrichtung 302 herausgeschoben bzw. auch - in umgekehrter Richtung - wieder eingezogen werden kann. Die Teildarstellung 304 wiederholt noch einmal den relevanten Ausschnitt für die Austrittsöffnung 114 aus der Austrittsronde 106 von Figur 2.

Die Detaildarstellung 308 zeigt nochmals einen Querschnitt von oben auf die Seitenansicht 300. Hier erkennt man deutlich, wie das Kabel 110 quasi tangential über den zweiten Wickelbereich aus der Austrittsöffnung 114 herausgeschoben werden kann. Erwähnt werden soll auch die Reinigungseinheit 306, durch die das Kabel 110 hindurchgeführt wird. Auf diese Weise kann sichergestellt werden, dass sich im Inneren der Aufwickeleinheit immer ein gereinigtes Kabel 110 befindet.

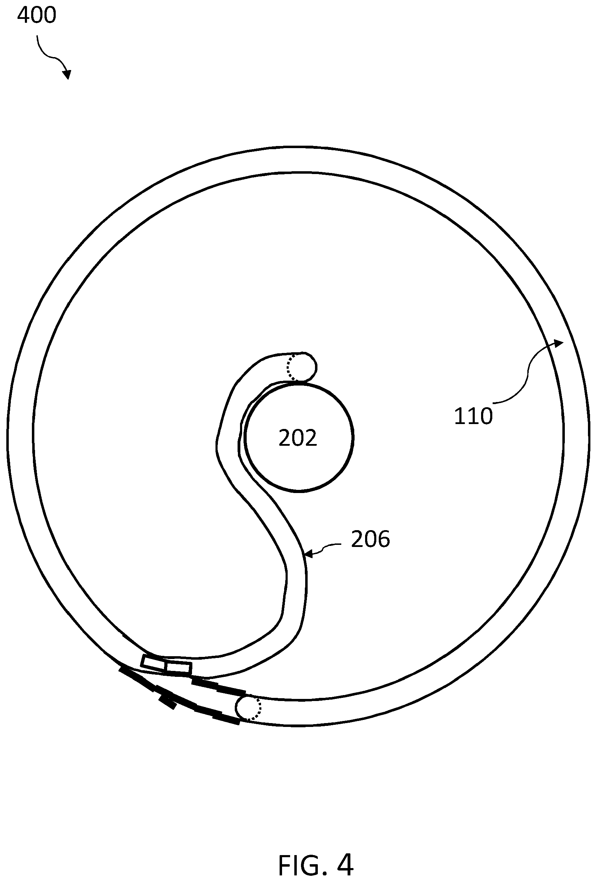

In **Fig. 4** ist dargestellt (400), wie das Kabel 110 von dem ersten Wickelbereich in der Nähe des schmaleren Teils 202 des Innenkörpers 104 in dem Bereich zwischen dem ersten Wickelbereich (nicht dargestellt) und dem zweiten Wickelbereich (nicht direkt dargestellt) geführt ist, sodass sich in dem ersten Wickelbereich und dem zweiten Wickelbereich eine gegenläufige Wickelrichtung ergibt.

Die Beschreibung der verschiedenen Ausführungsbeispiele der vorliegenden Erfindung wurde zum besseren Verständnis dargestellt, dient aber nicht einer unmittelbaren Einschränkung der Erfindung, die in den Ansprüchen definiert wird.

Die dargestellten Strukturen, Materialien, Abläufe und Äquivalente aller Mittel und/oder Schritte mit zugehörigen Funktionen in den untenstehenden Ansprüchen sind dazu gedacht, alle Strukturen, Materialien oder Abläufe anzuwenden, wie es durch die Ansprüche ausgedrückt ist.

Zusammenfassend bleibt festzustellen: Es wird eine Aufwickeleinheit für ein Kabel - im Wesentlichen eine Kabeltrommel - vorgestellt, deren Austrittsronde teilweise gegen ein Mitdrehen mit der Wickeleinheit blockiert werden kann, sodass ein Kabelende aus der Austrittsöffnung herausgeschoben wird. Das andere Ende des Kabels wird gleichzeitig von einem ersten Wickelbereich der Wickeleinheit abgewickelt. Eine jeweilige Reinigungseinheit im Bereich von Austrittsöffnungen zum Beispiel eines Gehäuses der Aufwickeleinheit sorgt dafür, dass nur gesäubertes Kabel in der Aufwickeleinheit aufgewickelt wird. Das Auf- und Abwickeln kann elektrisch angetrieben geschehen.

### Bezugszeichenliste:

- 100: Wickeleinheit Aufwickeleinheit
- 102: Wickeleinheit
- 104: Innenkörper
- 106: Austrittsronde
- 108: erster Wickelbereich
- 110: Kabel
- 112: zweiter Wickelbereich
- 114: Austrittsöffnung
- 200: Querschnitt durch die Wickeleinheit
- 202: schmaler Bereich des Innenkörpers
- 204: Hohlraum zwischen dem ersten Wickelbereich und dem Innenkörper
- 206: Abschnitt des Kabels zwischen erstem und zweitem Wickelbereich
- 208: symbolische Achse
- 210: Bereich des Innenkörpers
- 212: Lager bzw. Gleitlager
- 214: Akku
- 216: Motor
- 218: Steuerelektronik
- 300: Seitenansicht der Austrittsronde
- 302: Austrittsrichtung des Kabels
- 304: Teil Darstellung von Fig. 2
- 306: Reinigungseinheit
- 308: Detaildarstellung
- 400: Darstellung der gegenläufigen Wicklung des Kabels

## Patentansprüche

1. Eine Aufwickeleinheit (100) für ein Kabel zum Laden für ein Elektrofahrzeug, die Aufwickeleinheit (100) aufweisend
- eine rotationssymmetrische Wickeleinheit (102), die drehbar um eine Achse gelagert ist,
- einen rotationssymmetrischen Innenkörper (104), der fest mit der Achse verbunden ist,
- eine rotationssymmetrische Austrittsronde (106), die drehbar um die Achse gelagert ist,
wobei die Wickeleinheit (102) einen ersten Wickelbereich (108) einer ersten Breite aufweist, sodass ein Kabel (110) in den ersten Wickelbreich (108) von einem Bereich nahe der Achse übereinander aufwickelbar ist,
wobei die Wickeleinheit (102) einen zweiten Wickelbereich (112) in einem radialen Peripheriebereich der Wickeleinheit (102) aufweist, wobei der zweite Wickelbereich (112) angrenzend an den ersten Wickelbereich (108) angeordnet ist und eine zweite Breite aufweist, sodass ein Kabel (110) in dem zweiten Wickelbereich (112) von einem Bereich nahe dem ersten Wickelbereich (108) nebeneinander aufwickelbar in Richtung der Austrittsronde (106) gegenläufig zu einer Wickelrichtung im ersten Wickelbereich (108) aufwickelbar ist, und wobei der zweite Wickelbereich (112) sich über einen radialen Teil des Innenkörpers (104) erstreckt,
wobei die Austrittsronde (106) für eine vorgegebene Anzahl von Umdrehungen zusammen mit der Wickeleinheit (102) drehbar und dann blockierbar ist, sodass ein Kabel (110) infolge einer Weiterdrehung der Wickeleinheit (102) aus einer Austrittsöffnung (114) in einem radial peripheren Bereich der Austrittsronde (106) in Höhe des zweiten Wickelbereiches (112) herausschiebbar ist.

2. Die Aufwickeleinheit (100) gemäß Anspruch 1, wobei
- ein Kabel (110) mit einem Kabeldurchmesser, das sich von dem ersten Wickelbereich (108) zwischen diesem und dem Innenkörper in den zweiten Wickelbereich (112) und aus der Austrittsöffnung (114) erstreckt.

3. Die Aufwickeleinheit (100) gemäß Anspruch 2, wobei das Kabel (110) in einem aufgewickelten Zustand mit einem ersten Abschnitt in dem ersten Wickelbereich (102) aufgewickelt ist und mit seinem zweiten Abschnitt auf den zweiten Wickelbereich (112) gegenläufig aufgewickelt ist.

4. Die Aufwickeleinheit (100) gemäß Anspruch 2 oder 3, wobei der erste Abschnitt länger als der zweite Abschnitt ist.

5. Die Aufwickeleinheit (100) gemäß Anspruch 2 bis 4, wobei die erste Breite dem Kabeldurchmesser plus einer Toleranzbreite, die kleiner als die Kabelbreite ist, entspricht.

6. Die Aufwickeleinheit (100) gemäß Anspruch 2 bis 4, wobei die erste Breite breiter als der Kabeldurchmesser ist.

7. Die Aufwickeleinheit (100) gemäß Anspruch 2 bis 6, wobei die zweite Breite mindestens dem Kabeldurchmesser entspricht.

8. Die Aufwickeleinheit (100) gemäß Anspruch 2 bis 7, wobei das Kabel (110) für eine Stromleistung von mindestens 11 kW ausgelegt ist,
wobei der Kabeldurchmesser mindesten 16 mm beträgt.

9. Die Aufwickeleinheit (100) gemäß einem der vorangegangen Ansprüche, wobei der Innenkörper (104) einen ersten Bereich mit einem kleineren Durchmesser aufweist als in einem zweiten Bereich, über dessen radialem Teil sich der zweite Wickelbereich (112) erstreckt.

10. Die Aufwickeleinheit (100) gemäß Anspruch 9, wobei die Wickeleinheit (102) drehbar auf dem ersten Bereich des Innenkörpers (104) gelagert ist.

11. Die Aufwickeleinheit gemäß einem der vorangegangen Ansprüche, wobei der Innenkörper (104) hohl ist und eine Rotationsantriebseinheit für die Aufwickeleinheit (100) aufweist.

12. Die Aufwickeleinheit (100) gemäß Anspruch 11, wobei die Rotationsantriebseinheit
einen Motor aufweist, der die Wickeleinheit (102) gegenüber dem Innenkörper (104) antreibt
und/oder
wobei der Innenkörper (104) einen Akku zum Betrieb des Motors beherbergt,
und/oder
wobei der Motor von außerhalb des Innenkörpers (104) schaltbar ist
und/oder
wobei der Motor ferngesteuert schaltbar ist.

13. Die Aufwickeleinheit (100) gemäß Anspruch 11 oder 12, wobei eine Verriegelung zwischen der Austrittsronde (106) und der Wickeleinheit (108) und/oder dem Innenkörper elektromagnetisch aus dem Innenkörper (104) auslösbar ist.

14. Die Aufwickeleinheit (106) gemäß einem der vorangegangenen Ansprüche, zusätzlich ausweisend eine erste Reinigungseinheit (306) im Bereich der Austrittsöffnung (114) und/oder eine zweite Reinigungseinheit im Bereich des ersten Wickelbereiches (102).

15. Die Aufwickeleinheit (100) gemäß einem der vorangegangen Ansprüche, wobei ein Kabel (110) mit montierten Steckern an den beiden Enden in den ersten Wickelbereich (108), zwischen den ersten Wickelbereich (102) und den Innenkörper (104), in den zweiten Wickelbereich (112) und aus der Austrittsöffnung (114) durch jeweilige Schlitze in der Wickeleinheit (102) und der Austrittsronde (106) einlegbar ist.

## Claims

1. A winding unit (100) for a cable for charging an electric vehicle, the cable reel unit (100) comprising
- a rotationally symmetrical winding unit (102) rotatably mounted on an axis,
- a rotationally symmetrical inner body (104) fixedly connected to the axis,
- a rotationally symmetrical outlet ring (106) rotatably mounted on the axis,
wherein the winding unit (102) has a first winding area (108) of a first width, such that a cable (110) is woundable in the first winding area (108) on top of itself from an area close to the axis,
wherein the winding unit (102) has a second winding area (112) in a radial peripheral area of the winding unit (102), wherein the second winding area (112) is arranged adjacent to the first winding area (108) and has a second width, such that a cable (110) is woundable side by side in the second winding area (112) from an area near the first winding area (108) in the direction of the exit ring (106) in a direction opposite to a winding direction in the first winding area (108), and wherein the second winding area (112) extends over a radial portion of the inner body (104),
wherein the exit ring (106) is rotatable together with the winding unit (102) for a predetermined number of revolutions and then locked, such that a cable (110) is pushable out of an exit opening (114) in a radially peripheral region of the exit ring (106) as a result of further rotation of the winding unit (102) (106) at the level of the second winding area (112) as a result of further rotation of the winding unit (102).

2. The winding unit (100) according to claim 1, wherein
- a cable (110) having a cable diameter extends from the first winding area (108) between it and the inner body into the second winding area (112) and out of the exit opening (114).

3. The winding unit (100) according to claim 2, wherein the cable (110), in a wound state, is wound with a first section in the first winding area (102) and with its second section wound in the opposite direction on the second winding area (112).

4. The winding unit (100) according to claim 2 or 3, wherein the first section is longer than the second section.

5. The winding unit (100) according to claims 2 to 4, wherein the first width corresponds to the cable diameter plus a tolerance width that is smaller than the cable width.

6. The winding unit (100) according to claims 2 to 4, wherein the first width is wider than the cable diameter.

7. The winding unit (100) according to claims 2 to 6, wherein the second width corresponds at least to the cable diameter.

8. The winding unit (100) according to claims 2 to 7, wherein the cable (110) is designed for a power throughput of at least 11 kW, wherein the cable diameter is at least 16 mm.

9. The winding unit (100) according to any of the preceding claims, wherein the inner body (104) has a first region with a smaller diameter than in a second region, over the radial portion of which the second winding region (112) extends.

10. The winding unit (100) according to claim 9, wherein
the winding unit (102) is rotatably mounted on the first portion of the inner body (104).

11. The winding unit according to any of the preceding claims, wherein the inner body (104) is hollow and comprises a rotational drive unit for the winding unit (100).

12. The winding unit (100) according to claim 11, wherein the rotational drive unit comprises a motor that drives the winding unit (102) relative to the inner body (104) and/or
wherein the inner body (104) houses a rechargeable battery for operating the motor,
and/or
wherein the motor is switchable from outside the inner body (104)
and/or
wherein the motor is switchable remotely.

13. The winding unit (100) according to claim 11 or 12, wherein a lock between the exit ring (106) and the winding unit (108) and/or the inner body is activatable electromagnetically from within the inner body (104).

14. The winding unit (100) according to one of the preceding claims, additionally comprising a first cleaning unit (306) in the area of the outlet opening (114) and/or a second cleaning unit in the area of the first winding area (102).

15. The winding unit (100) according to one of the preceding claims, wherein a cable (110) with plugs mounted at both ends is guided into the first winding area (108), between the first winding area (102) and the inner body (104), into the second winding area (112) and out of the exit opening (114) through respective slots in the winding unit (102) and the exit ring (106).

## Revendications

1. Unité d'enroulement (100) pour un câble de charge d'un véhicule électrique, l'unité d'enroulement (100) comprenant
un tambour d'enroulement (102) axisymétrique, monté rotatif autour d'un axe,
un corps interne (104) axisymétrique, fixé à l'axe,
une bague de sortie (106) axisymétrique, montée rotative sur l'axe,
dans laquelle le tambour d'enroulement (102) comporte une première zone d'enroulement (108) d'une première largeur, de sorte qu'un câble (110) est enroulable dans la première zone d'enroulement (108) en couches superposées depuis une zone proche de l'axe,
dans laquelle le tambour d'enroulement (102) comporte une deuxième zone d'enroulement (112) dans une zone périphérique radiale du tambour d'enroulement (102), la deuxième zone d'enroulement (112) étant disposée adjacente à la première zone d'enroulement (108) et présentant une deuxième largeur, de sorte qu'un câble (110) est enroulable côte à côte dans la deuxième zone d'enroulement (112) depuis une zone proche de la première zone d'enroulement (108) en direction de la bague de sortie (106), dans un sens opposé au sens d'enroulement dans la première zone d'enroulement (108), et la deuxième zone d'enroulement (112) s'étendant sur une portion radiale du corps interne (104),
dans laquelle la bague de sortie (106) est rotative conjointement avec le tambour d'enroulement (102) pour un nombre prédéterminé de tours puis verrouillable, de sorte qu'un câble (110) est expulsable par poussée hors d'une ouverture de sortie (114) située dans une région radiale périphérique de la bague de sortie (106), au niveau de la deuxième zone d'enroulement (112), du fait d'une rotation supplémentaire du tambour d'enroulement (102).

2. Unité d'enroulement (100) selon la revendication 1, dans laquelle un câble (110), ayant un diamètre de câble, s'étend depuis la première zone d'enroulement (108) entre celle-ci et le corps interne dans la deuxième zone d'enroulement (112) et hors de l'ouverture de sortie (114).

3. Unité d'enroulement (100) selon la revendication 2, dans laquelle le câble (110), à l'état enroulé, est enroulé avec une première section dans la première zone d'enroulement (102) et avec sa deuxième section enroulée en sens opposé sur la deuxième zone d'enroulement (112).

4. Unité d'enroulement (100) selon la revendication 2 ou 3, dans laquelle la première section est plus longue que la deuxième section.

5. Unité d'enroulement (100) selon l'une des revendications 2 à 4, dans laquelle la première largeur correspond au diamètre du câble plus une largeur de tolérance qui est inférieure à la largeur du câble.

6. Unité d'enroulement (100) selon l'une des revendications 2 à 4, dans laquelle la première largeur est supérieure au diamètre du câble.

7. Unité d'enroulement (100) selon l'une des revendications 2 à 6, dans laquelle la deuxième largeur correspond au moins au diamètre du câble.

8. Unité d'enroulement (100) selon l'une des revendications 2 à 7, dans laquelle le câble (110) est conçu pour une puissance transmise d'au moins 11 kW, le diamètre du câble étant d'au moins 16 mm.

9. Unité d'enroulement (100) selon l'une des revendications précédentes, dans laquelle le corps interne (104) comporte une première zone de diamètre plus petit que dans une deuxième zone, sur la portion radiale de laquelle s'étend la deuxième zone d'enroulement (112).

10. Unité d'enroulement (100) selon la revendication 9, dans laquelle le tambour d'enroulement (102) est monté rotatif sur la première zone du corps interne (104).

11. Unité d'enroulement selon l'une des revendications précédentes, dans laquelle le corps interne (104) est creux et comprend une unité d'entraînement en rotation pour l'unité d'enroulement (100).

12. Unité d'enroulement (100) selon la revendication 11, dans laquelle l'unité d'entraînement en rotation comprend un moteur qui entraîne le tambour d'enroulement (102) par rapport au corps interne (104),
et/ou dans laquelle le corps interne (104) loge une batterie rechargeable pour faire fonctionner le moteur,
et/ou dans laquelle le moteur est commandable depuis l'extérieur du corps interne (104), et/ou dans laquelle le moteur est commandable à distance.

13. Unité d'enroulement (100) selon la revendication 11 ou 12, dans laquelle un verrouillage entre la bague de sortie (106) et le tambour d'enroulement (108) et/ou le corps interne est actionnable électromagnétiquement depuis l'intérieur du corps interne (104).

14. Unité d'enroulement (100) selon l'une des revendications précédentes, comprenant en outre une première unité de nettoyage (306) dans la zone de l'ouverture de sortie (114) et/ou une deuxième unité de nettoyage dans la zone de la première zone d'enroulement.

15. Unité d'enroulement (100) selon l'une des revendications précédentes, dans laquelle un câble (110) avec des connecteurs montés aux deux extrémités est insérable dans la première zone d'enroulement (108), entre la première zone d'enroulement (102) et le corps interne (104), dans la deuxième zone d'enroulement (112) et hors de l'ouverture de sortie (114) à travers des fentes respectives dans le tambour d'enroulement (102) et la bague de sortie (106).
